Europäisches Patentamt

European Patent Office

Office européen des brevets

(19)

(11) Numéro de publication: **0 170 557**
**B1**

(12)     FASCICULE DE BREVET EUROPEEN

(45) Date de publication du fascicule du brevet: **22.08.90**

(51) Int. Cl.⁵: **G 01 S 13/34,** G 01 S 13/70

(21) Numéro de dépôt: **85401263.0**

(22) Date de dépôt: **25.06.85**

(54) Radioaltimètre à modulation de fréquence.

(30) Priorité: **29.06.84 FR 8410350**

(43) Date de publication de la demande:
**05.02.86 Bulletin 86/06**

(45) Mention de la délivrance du brevet:
**22.08.90 Bulletin 90/34**

(84) Etats contractants désignés:
**CH DE GB IT LI NL**

(56) Documents cités:
**GB-A- 892 986**
**US-A-2 839 734**
**US-A-3 943 342**

**IEEE TRANSACTIONS ON GEOSCIENCE
ELECTRONICS, vol. GE-9, no. 2, avril 1971, pages
86-89, New York, US; G.H. BARRY: "A lowpower vertical-incidence ionosonde"**

**L'ONDE ELECTRIQUE, vol. 51, no. 5, mai 1971,
pages 406-410, Paris, FR; J.P. LANDROT:
"Radioaltimètre à modulation de fréquence"**

(73) Titulaire: **THOMSON-CSF
51, Esplanade du Général de Gaulle
F-92800 Puteaux (FR)**

(72) Inventeur: **Lazarus, Michel
THOMSON-CSF SCPI 173, bld Haussmann
F-75379 Paris Cedex 08 (FR)**

(74) Mandataire: **Benoit, Monique et al
THOMSON-CSF SCPI
F-92045 PARIS LA DEFENSE CEDEX 67 (FR)**

Courier Press, Leamington Spa, England.

# EP 0 170 557 B1

**Description**

L'invention concerne un radioaltimètre à modulation de fréquence, et, notamment, un tel radioaltimètre dans lequel l'émetteur et le récepteur se partagent une antenne commune.

La technique des radioaltimètres à onde continue modulée en fréquence, ou radioaltimètre FM/CW selon la terminologie anglosaxonne, est largement connue.

Les principes de base des radars à onde continue sont exposés dans la littérature technique correspondante, et, notamment, dans l'ouvrage de M. I. Skolnik intitulé "Radar Handbook" chapitre 16, édité en 1970 par McGraw-Hill. Les principaux avantages des radars F/CW résident dans leur simplicité relative de construction et dans leur capacité de fournir une mesure précise de la distance relative d'un objet réfléchissant situé à l'intérieur de leur domaine de détection. Par contre, les radars FM/CW de l'état de la technique présentent des contraintes de construction et des limitations techniques qui résultent de la nécessité d'utiliser deux antennes séparées: une antenne d'émission et une antenne de réception, généralement, de caractéristiques électriques et mécaniques identiques. En effet, dans le but d'assurer un découplage radioélectrique suffisant, l'écartement entre les deux antennes doit être important afin d'éliminer les interférences électromagnétiques entre l'émetteur et le récepteur. Il en résulte alors certains problèmes radioélectriques et mécaniques, du fait, notamment, que les antennes ne peuvent être physiquement intégrées à l'équipement, mais doivent être fixées sur la structure du véhicule porteur et interconnectées avec l'équipement par l'intermédiaire de lignes de transmission dont le délai de transmission doit être calibré. De plus, ces lignes de transmission introduisent des pertes de propagation et des reflexions multiples, lesquelles dégradent les performances de l'équipement. Lorsque la distance relativs de l'objet à détecter est réduite, et que cet objet est de large étendue, il peut appraître un phénomène de trajets multiples. Ce phénomène de trajets multiples a pour effet de fournir des mesures de distances erronées. La géométrie du trajet des signaux rayonnés et captés par les antennes n'est pas parfaite, ainsi il peut en résulter des erreurs des mesures lorsque l'altitude du porteur est de l'ordre du mètre. D'un autre côté, si l'on considère les problèmes mécaniques soulevés par l'implantation des deux antennes sur la structure du véhicule porteur, on peut citer: la nécessité de réserver, à l'intérieur du véhicule, des logements pour ces antennes, des passages pour les lignes de transmission à radiofréquence et des accès aux connecteurs, permettant le montage et le démontage du radioaltimètre. Enfin la continuité électrique de la paroi du vehicle porteur doit être préservée, ce qui impose des contraintes de construction de cette paroi.

Un radioaltimètre de ce type à deux antennes est par exemple décrit dans un article de l'Onde Electrique, vol. 51, N° 5, Mai 1971, pages 406—410 "Radioaltimètre à modulation de fréquence". Par rapport aux radioaltimètres classiques, ce radioaltimètre est amélioré en maintenant l'écart de fréquence entre émission et réception constant par asservissement de la pente de modulation de l'émetteur grâce à une boucle reliant la sortie du récepteur à l'entrée du modulateur de l'émetteur. Mais ceci ne remédie pas aux inconvénients cités plus haut pour les radioaltimètres à deux antennes.

Il a déjà été proposé dans le brevet européen 0 118 342 un radioaltimètre FM/CW dans lequel l'émetteur et le récepteur fonctionnent de façon continue en utilisant une antenne commune. Dans ce radioaltimètre le signal local du mélangeur à radiofréquence du récepteur est obtenu par réflexion du signal transmis par le T.O.S. (taux d'onde stationnaire) de l'antenne. La construction de l'équipement se trouve ainsi notablement simplifiée, mais au détriment de l'altitude minimale mesurable, laquelle peut atteindre 6 à 10 mètres, selon l'altitutde maximale de fonctionnement du radioaltimètre.

Le but de l'invention est de fournir un radioaltimètre mono-antenne à modulation de frequence capable d'opérer sur une large plage d'altitude.

Pour atteindre ce but, l'émetteur et le récepteur du radioaltimètre opèrent cycliquement selon un mode de fonctionnement entrelacé tel que le signal écho du sol ne soit pas "éclipsé" par le signal d'émission.

La présente invention a pour objet un radioaltimètre modulé en fréquence tel que défini dans les revendications.

L'invention sera mieux comprise dans la description détaillée qui va suivre, faite en regard des dessins annexés, sur ces dessins:

la figure 1 est un bloc diagramme simplifié qui représente un radioaltimètre mono-antenne de l'art antérieur:

la figure 2 est un bloc diagramme qui représente la structure de base du radioaltimètre selon l'invention;

la figure 3 est un chronogramme des principaux signaux élaborés par les élémentes du radioaltimètre;

la figure 4 est un schéma électrique qui représente une forme de réalisation du commutateur E/R;

la figure 5 est un schéma électrique qui représente une forme de réalisation d'un circuit de porte du commutateur E/R;

la figure 6 est un schéma électrique d'une variante de réalisation du commutateur E/R;

la figure 7 est un bloc diagramme qui représente une forme de réalisation de l'amplificateur passe-bande à audiofréquence du récepteur;

la figure 8 est un bloc diagramme qui représente une forme de réalisation du modulateur d'émission et du générateur des signaux de commande du commutateur E/R;

la figure 9 est un bloc diagramme qui représente une variante de réalisation du modulateur d'émission;

la figure 10 se rapporte à la figure 8 et montre un chronogramme des signaux;

la figure 11 se rapporte à la figure 9 et montre un chronogramme des signaux.

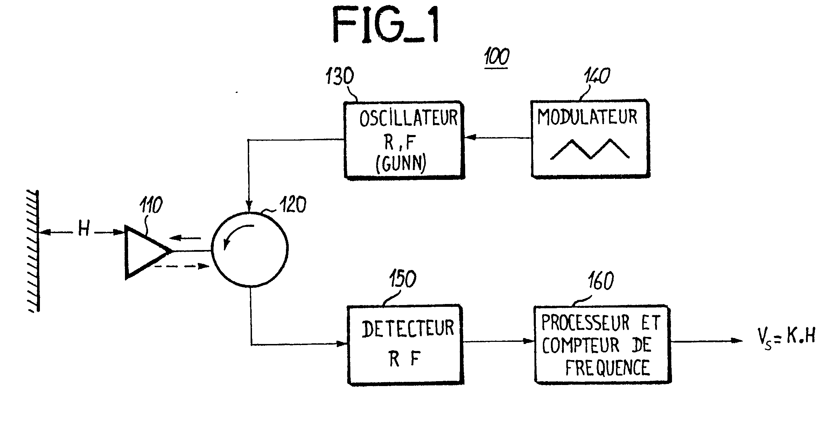

La figure 1 est un bloc diagramme simplifié qui représente un radioaltimètre mono-antenne *100* de l'art antérieur connu du document EP—A—0118342.

Une antenne directive émission-réception 110 est connectée à un circulateur 120 ayant une entrée reliée à un émetteur FM/CW et une sortie reliée à un récepteur homodyne. L'émetteur est constitué par un oscillateur GUNN 130 accordable en fréquence par un élément varactor. La fréquence d'émission est variée linéairement au moyen d'un signal triangulaire, de période de récurrence fixe, fourni par un modulateur 140. Le récepteur comprend un détecteur à radiofréquence 150 dans lequel l'onde locale est obtenue par une fraction du signal d'émission réfléchi par le T.O.S. (taux d'onde stationnaire) de l'antenne. Le signal de sortie du détecteur à radiofréquence est appliqué à un processeur 160 qui inclut un compteur de la fréquence de battement entre l'onde locale et le signal écho renvoyé par le sol. Ce compteur de fréquence délivré un signal de sortie continu Vs dont la grandeur est proportionnelle à l'altitude H au-dessus du terrain.

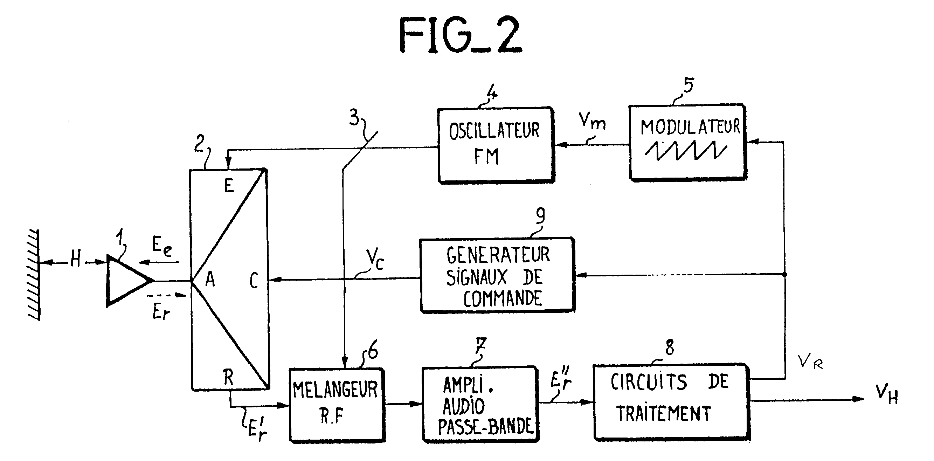

La figure 2 est un bloc diagramme qui représente la structure de base du radioaltimètre. Un aérien directif 1 est connecté à un commutateur émission-réception 2, lequel permet, cycliquement, de rayonner le signal d'émission Ee et de capteur le signal Er de réverbération du sol. Le commutateur d'émission-réception (E/R) comporte: un accès d'entrée (E), un accès de sortie (R) et une entrée de commande (C). L'émetteur du radioaltimètre est connecté à l'accès d'entrée (E) de ce commutateur E/R et il comprend connecté en série: un coupleur directif 3, un oscillateur à radiofréquence 4 et un modulateur 5. L'oscillateur à radiofréquence opère avec une fréquence porteuse. Fc et il comporte des moyens électroniques permettant de moduler linéairement la fréquence porteuse avec une déviation de fréquence maximale constante égale à $\Delta m$. Le modulateur 5 délivre des signaux périodiques en dents de scie et il comporte des moyens électroniques permettant de faire varier la période Tm de ces signaux en dents de scie et ceci, proportionnellement au temps de retard $\tau$ du signal écho réverbéré par le sol et capté par l'aérien. Le récepteur du radioaltimètre est du type homodyne et il est connecté à l'accès de sortie (R) commutateur E/R. Ce récepteur comprend, connectés en série: un mélangeur équilibré 6 à radiofréquence ayant son entrée de référence connectée au coupleur directif 3 de l'émetteur; un amplificateur passe-bande à audiofréquence 7, et des circuits 8 permettant l'acquisition et la poursuite du signal écho d'altitude capté par l'aérien. Ces circuits d'acquisition et de poursuite délivrent un signal de mesure $V_H$ représentatif du temps de retard du signal écho, lequel est proportionnel à l'altitude au-dessus du sol. Le moyen de commande du commtateur E/R est fourni par un générateur de signaux périodiques dont la periode de récurrence $T_R$ est proportionnelle au temps de retard $\tau$ du signal écho. Enfin, les circuits d'acquisition et de poursuite du signal écho fournissent un signal de commande $V_R$ qui est appliqué, d'une part, au modulateur d'émission 5, et d'autre part, au générateur de signaux de commande 9 du commutateur E/R.

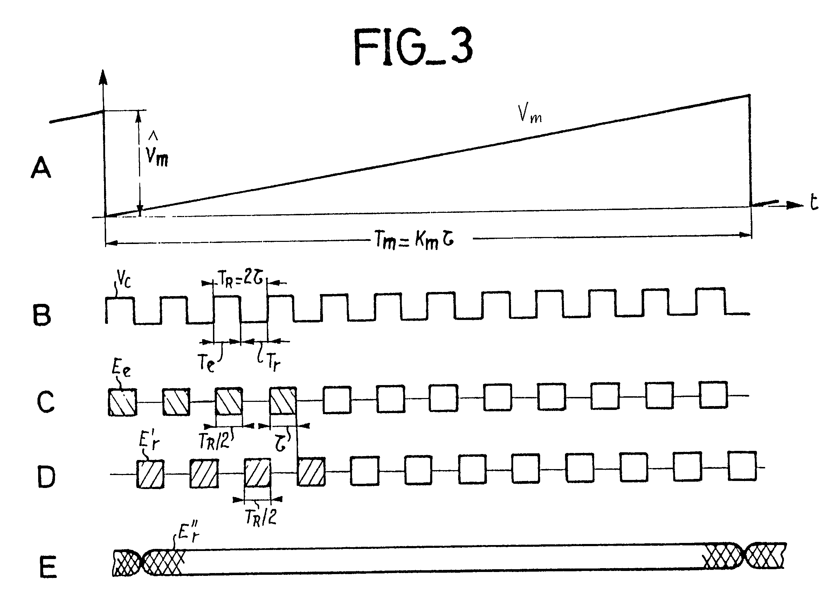

La figure 3 représente un chronogramme des principaux signaux du radioaltimètre. La courbe (A) montre la forme d'onde des signaux de modulation Vm(t) fournis par le modulateur 5. Ces signaux de modulation en dents de scie ont une période de récurrence Tm donnée par la relation suivante:

$$Tm = Km \cdot \tau$$

avec $\tau$ le temps de retard du signal écho, et l'amplitude de ces signaux de modulation est constante. La déviation de fréquence $\Delta fm(t)$ de la fréquence porteuse Fc de l'oscillateur à radiofréquence 4 est donnée par la relation suivante:

$$\Delta fm(t) = Kv \cdot Vm(t)$$

La courbe (B) montre la forme d'onde du signal de commande Vc du commutateur E/R fourni par le générateur de signaux 9. Ce signal de commande Vc dont les durées Tr et Te sont sensiblement égales à une période de récurrence $T_R$ donnée par la relation suivante:

$$T_R = (Te + Tr) = 2\tau$$

où $\tau$ la durée de trajet du signal écho est donnée par la relation:

$$\tau = 2H/c$$

avec: H l'altitude au-dessus du sol et c la vitesse de propagation des ondes électromagnétiques.

On supposera que lorsque ce signal Vc est au niveau haut, le commutateur E/R est dans la position émission et, inversement, lorsque ce signal Vc est au niveau bas, le commutateur E/R se trouve dans la position réception.

La courbe (C) montre la forme d'onde des signaux Ee rayonnés par l'aérien 1; la durée de ces signaux Ee est égale à $T_R/2 = \tau$ et la fréquence porteuse Fc varie linéairement en fonction du temps.

La courbe (D) montre la forme d'onde des signaux à radiofréquence E'r à l'accès de sortie R du commutateur E/R. La puissance Pr de ces signaux E'r est donnée par la relation suivante:

$$Pr = \frac{Pe \cdot G \cdot \lambda^2 c \cdot \sigma o}{(4\pi)^2 \cdot H^2}$$

où

Pe=la puissance du signal de sortie de l'oscillateur à radiofréquence de l'émetteur

G=le gain de l'aérien

λc=la longueur d'onde correspondant à la fréquence porteuse Fc d'émission

σo=le coefficient de reflectivé du sol

H=l'altitude au-dessus du sol.

La courbe (E) montre la forme d'onde des signaux E"r à la sortie de l'amplificateur passe-bande à audiofréquence. La fréquence de ces signaux E"r est égale à la fréquence de battement $f_b$ donnée par la relation suivante:

$$f_b = \frac{\Delta Fm}{Tm} \cdot \tau = \frac{\Delta Fm}{Km} = C^{te}$$

Le spectre des signaux E'r est un spectre de raies, dont la raie plus forte est à la fréquence de battement fb. La bande passante de l'amplificateur à audiofréquence 7 est centrée sur cette fréquence de battement et sa fréquence de coupure supérieure fcH est telle que:

$$fb < fcH < FR - fb$$

Il en résulte qu'à la sortie de l'amplificateur à audiofréquence le signal E"r est continu pendant la période de temps Tm.

Le rapport de la période de récurrence Tm du signal de modulation à la période de commutation $T_R$ du commutateur E/R est constante et elle est étale à Km/2.

L'altitude H et les grandeurs des paramètres Δfm, Tm et fb du radioaltimètre sont liées par la relation:

$$H = \frac{C \cdot f_b}{2\Delta Fm} \cdot Tm$$

Lorsque l'altitude H diminue, la période Tm des dents de scie de modulation en fréquence de l'émetteur diminue proportionnement. Il s'en suit que l'altitude minimale Hmin de mesure du radioaltimètre est sensiblement égale à:

$$Hmin = \frac{C}{2\Delta Fm}$$

avec la condition: $f_b \cdot Tm = 1$

A titre illustratif, si la déviation de fréquence ΔFm de l'émetteur est égale à 100 MHz

$$Hmin = 1,5 \text{ mètres}$$

à laquelle correspond un temps de retard $\tau = 10^{-2}$ µs. La fréquence de récurrence

$$F_R = \frac{1}{T_R} = \frac{1}{2\tau}$$

est alors égale à 50 MHz.

Lorsque l'altitude H croît la période Tm des signaux en dents de scie croît et la fréquence de récurrence $F_R$ des signaux de commande du commutateur E/R diminue. Il en résulte que la fréquence d'échantillonnage du signal de battement, de fréquence $f_b$ fixe, doit rester inférieur à FR/2 ce qui impose une limite supérieure de la mesure de l'altitude maximale Hmax de mesure du radioaltimètre. Cette altitude Hmax est donnée par la relation suivante:

$$Hmax = \frac{C \cdot TR}{4} = FR/2 = \frac{C}{8fb}$$

A titre illustratif si $f_b$=20 KHz, Hmax=1875 mètres. Toute fois il faut remarquer que cette limite de mesure de l'altitude maximale peut être étendue, si l'on considère la condition générale "d'antiéclipse":

$$T_R = \frac{2\tau}{(2K+1)}$$

avec K un nombre entier incluant la valeur zéro.

Ainsi l'altitude maximale Hmax est donnée par la formule générale:

$$Hmax = \frac{C}{8f_b} \cdot (2K+1)$$

Enfin, on peut également remarquer dans la relation précédente Tm=Kmτ, le facteur de proportionnalité Km peut être un nombre fractionnaire.

Si l'on se réfère à nouveau à la figure 2, on pourra noter les caractéristiques constructives décrites ci-après. Le T.O.S. de l'aérien directif 1 n'est pas un paramètre critique puisque le niveau du signal d'émission réfléchi par l'aérien vers le récepteur se trouve bloqué par le commutateur E/R. De ce fait, l'aérien peut être constitué par une source à fentes rayonnantes réalisée selon une technique de circuit imprimé. L'oscillateur à radiofréquence 4 peut être réalisé par un élément GUNN couplé à un élément varactor. Le mélangeur à radiofréquence 6 du récepteur est du type équilibré afin de limiter les signaux de bruit parasites résultant des fluctuations d'amplitude de l'oscillateur d'émission. Il est toujours préférable d'égaliser les longeurs électriques entre le coupleur directif 3 et le mélangeur équilibré 6, d'une part, et entre le coupleur directif et l'entrée de signal du mélangeur équilibré, via l'aérien, d'autre part. L'amplificateur passe-bande 7, doit rejeter efficacement la fréquence des signaux de modulation en dents de scie et transmettre le signal de battement E"r dont la durée est égale à la période Tm des signaux de modulation en dents de scie. Les circuits d'acquisition et de poursuite opèrent selon deux modes de fonctionnement: un premier mode pendant lequel la valeur du signal $V_H$ est variée entre les limites minimale et maximale, afin de détecter la présence d'un signal écho dans la bande passante de l'amplificateur passe-bande, et un second mode pendant lequel l'écart de fréquence entre la fréquence du signal écho et la fréquence nominale de battement $f_b$ est mesurée et intégrée pour fournir le signal de mesure $V_H$.

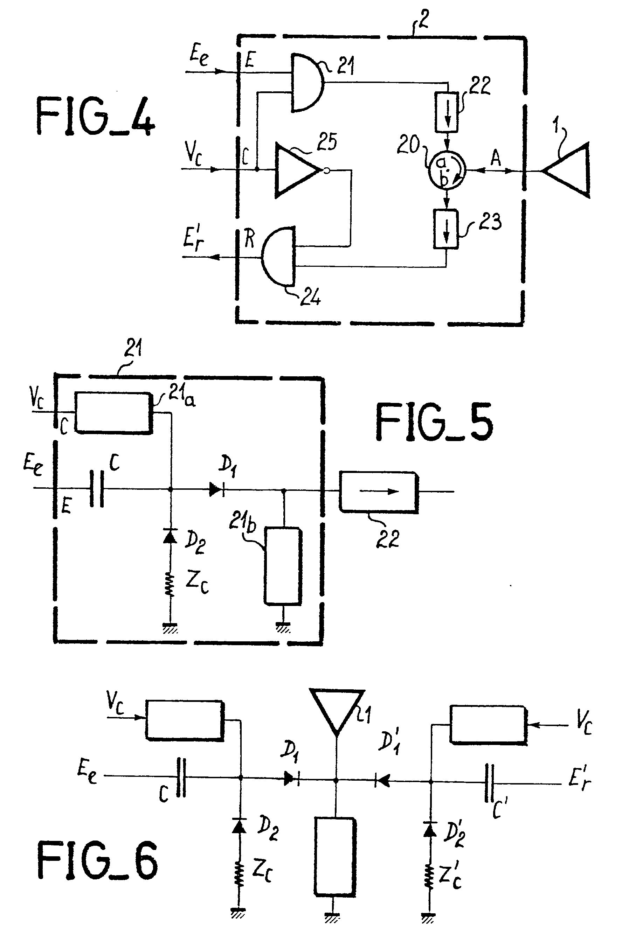

La figure 4 est un bloc diagramme qui montre une forme de réalisation du commutateur d'antenne. Le commutateur d'antenne 2 comporte une entrée de signal (E), une sortie de signal (R) et une entrée/sortie de signal (A), laquelle est connectée à un circulateur (20) ayant une entrée (a) et une sortie (b). La voie d'entrée du commutateur comprend, reliés un série: une première porte (21) et un isolateur unidirectionnel (22), lequel les connecté à l'entrée (a) du dispositif isolateur (22). La voie de sortie du commutateur d'antenne qui est connectée à la sortie (b) du dispositif circulateur comprend reliée en série: un isolateur unidirectionnel (23) et une seconde porte (24). Les entrées de commande des premières et seconde portes sont connectées au signal de commande Vc, par une liaison directe pour la première porte et par l'intermédiaire de l'élément inverseur 26 pour la seconde porte. La fonction de la première porte est de découper le signal continu à radiofréquence fourni par l'oscillateur de l'émetteur. La fonction de la seconde porte combinée avec l'isolateur est d'isoler le récepteur pendant les intervalles d'émission. Selon une forme de réalisation préférée, l'impédance d'entrée de chacune des deux entrées de signal du commutateur d'antenne est maintenue constante dans les deux états de commutation.

La figure 5 est un schéma synoptique qui montre une forme de construction d'une porte, telle que la première porte 21 du commutateur E/R décrit à la figure 4. Cette porte comporte une entrée de signal E et une entrée de commande C. La liaison entre l'entrée de signal E et l'isolateur unidirectionnel 22 comprend une capacité d'isolement C et une diode D1. Au point de jonction de la capcité C et de la diode D1 sont connectés, d'une part, une diode D2 en série avec une impédance Zc dont la valeur est égale à l'empédance d'entrée de l'aérien, et d'autre part, un premier élément de blocage 21a du signal à radiofréquence Ee, lequel élément de blocage est relié à la source de signaux de commande Vc. Un second élément de blocage 21b est connecté au point de jonction de la diode D1 et de l'isolateur unidirectionnel 22.

La configuration de la seconde porte 24, peut être identique à celle de la première porte 21.

La figure 6 est un bloc diagramme qui montre une forme de réalisation du commutateur E/R dans lequel le circulateur et les isolateurs unidirectionnels ont été éliminés. En effet lorsque le taux de commutation des diodes D1 et D'1 est élevé, l'émetteur et le récepteur peuvent être cycliquement isolés de l'aérien 1.

Le commutateur E/R peut être réalisé sous une forme intégrée et utilisé des éléments de commutation FET-AsGa comme décrit dans l'article de Y. Ayasli "Microwave Switching with GaAs FETs" publié dans la revue "Microwave Journal" Nov. 1982, page 60. Un tel commutateur permet d'atteindre des vitesses de commutation inférieures à la nanoseconde et de commuter de signaux radiofréquence d'un niveau de plusieurs watts.

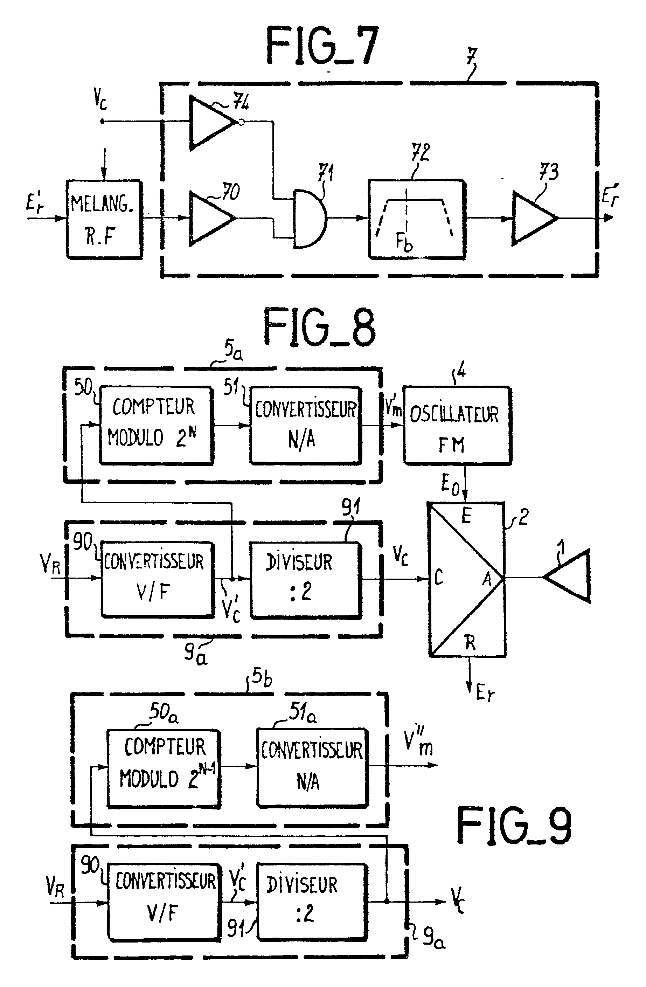

La figure 7 représente une variante de réalisation de l'amplificateur passe-bande à radiofréquence 7 du récepteur. Selon cette variante de réalisation cet amplificateur passe-bande comprend un préamplificateur à faible bruit 70, un circuit de porte 71, un filtre passe-bande 72 et un amplificateur de sortie 73. L'entrée de commande du circuit de porte est reliée à la source de signaux de commande Vc du commutateur E/R par l'intermédiaire d'un élément inverseur 75. La fonction du circuit de porte 71 est d'accroître l'isolement entre l'émetteur et le récepteur pendant les périodes d'emission Te, et de diminuer le niveau des signaux de bruit du récepteur.

La figure 8 est un bloc diagramme qui représente une forme de réalisation du modulateur de l'émetteur et du générateur de signaux de commande du commutateur E/R. Le générateur 9a de signaux de commande Vc comprend un convertisseur Tension/Fréquence (V/F) qui reçoit le signal de commande $V_R$ qui décroit avec l'altitude (H) et il élabore un signal d'horloge V'c dont la période de récurrence $T_R/2$ est proportionnelle à la grandeur du signal de commande. Le signal d'horloge V'c est appliqué à un circuit diviseur par un facteur deux, qui délivre le signal de commande Vc du commutateur E/R (2) dont le facteur de forme est égal à un demi. Le modulateur 5a de l'oscillateur à radiofréquence 4 de l'émetteur est réalisé sous une forme numérique. Ce modulateur 5a comprend un compteur modulo $2^N$, 50, qui est connecté à un convertisseur Numérique-Analogique (N/A) 51. Le signal de sortie V'm est appliqué à l'entrée de commande en fréquence de l'oscillateur à radiofréquence 4.

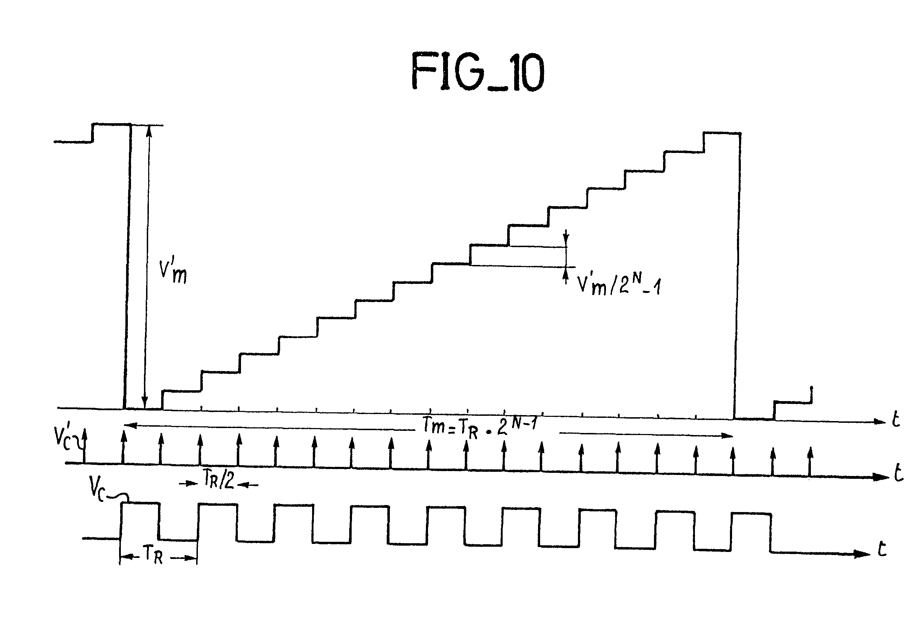

La figure 10 est un chronogramme des signaux du modulateur 5a et du générateur de signaux 9a décrits à la figure 8. Le signal de sortie V'c du convertisseur V/F est un signal d'horloge de période de récurrence $T_R/2=\tau=2H/C$. Le signal de commande Vc du commutateur E/R est un signal carré de période de récurrence $T_R$ et, par exemple, lorsque ce signal de commande est au niveau haut, le signal d'émission Ec est transmis à l'antenne 1. Le signal de modulation V'm de l'émetteur est un signal en escalier de période de récurrence $Tm=2^{(N-1)}$. $T_R$ et les sauts des paliers ont pour valeur $\Delta V'm(2^N-1)$. On pourra noter que les sauts de fréquence de l'émetteur sont égaux et ont pour valeur la fréquence du battement fb.

La figure 9 est un bloc diagramme qui représente une variante de réalisation du modulateur d'émission de la figure 8. Selon cette variante de réalisation le générateur de signaux de commande Vc du commutateur E/R est identique à celui décrit précédemment. Le modulateur d'émission 9b comprend un compteur modulo $2^{N-1}$, 50a, qui est connecté à la sortie du diviseur 91 et un convertisseur N/A, 51a, lequel délivre un signal de modulation V''m à l'oscillateur à radiofréquence 4 de l'émetteur.

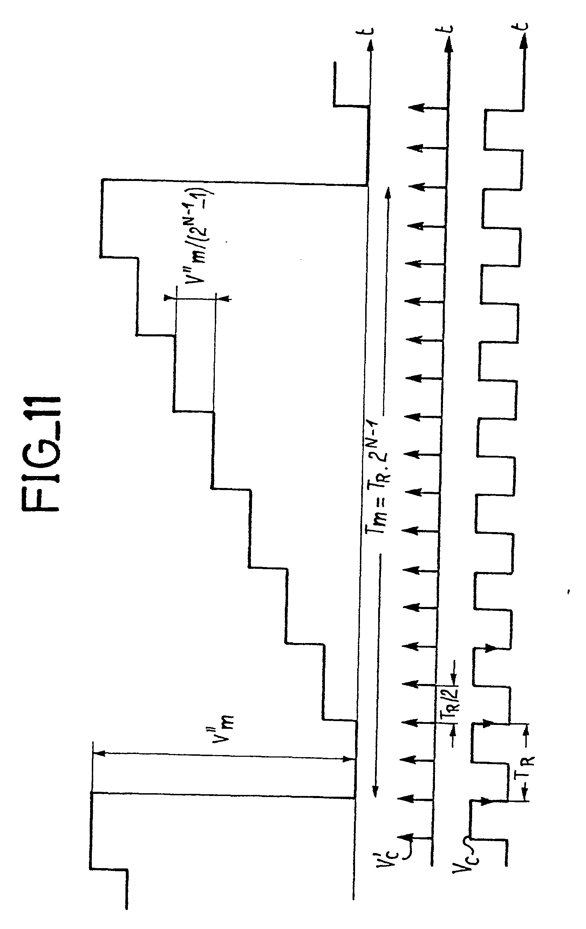

La figure 11 est un chronogramme des signaux du modulateur 5b, lesquels signaux sont représentés en regard des signaux du générateur 9a des signaux de commande Vc du commutateur E/R. Ce signal de modulation V''m est un signal en escallier de période de récurrence $Tm=2^{(N-1)} \cdot T_R$ et le niveau de chacun des paliers est égal à $V''m/(2^{(N-1)}-1)$.

L'invention n'est pas limitée dans ses caractéristiques par les formes particulières de réalisation des éléments, lesquelles ont été décrites à titre illustratif, nullement limitatif. Elle n'est pas limitée par les valeurs numériques des paramètres de construction, lesquelles doivent être adaptées en fonction des applications particulières du radioaltimètre.

**Revendications**

1. Radioaltimètre mono-antenne à modulation de fréquence comprenant un émetteur à onde continue modulée linéairement en fréquence, ledit émetteur comportant un oscillateur à radiofréquence (4) relié à un modulateur (5) fournissant des signaux de modulation (Vm), un récepteur homodyne comportant connectés en série, un mélangeur à radiofréquence (6) relié à une source d'un signal de fréquence locale (3), un amplificateur passe-bande à audiofréquence (7) en sortie duquel est obtenu un signal de fréquence égale à la fréquence de battement entre le signal local du mélangeur et le signal écho et des circuits d'acquisition et de poursuite (8) du signal écho (Er), lesquels circuits fournissent un signal de sortie $(V_H)$ représentatif du temps de retard $\tau$ du signal écho, une antenne directive commune (1) à l'émetteur et au récepteur et des moyens (2) pour relier l'émetteur et le récepteur à ladite antenne caractérisé en ce que lesdits moyens comprennent un commutateur émission-réception (2) relié à ladite antenne, ce commutateur ayant une entrée de commande (C) connectée à un générateur (9) de signaux périodiques (Vc), et que les circuits d'acquisition et de poursuite fournissent aussi un signal de sortie de commande $(V_R)$ qui contrôle les périodes de récurrence des signaux de sortie du modulateur (5) et du généateur de commande (9) du commutateur (2) de manière à ce que la période de récurrence (Tm) des signaux de modulation soit proportionnelle au temps de retard $\tau$ du signal écho (Er), que la période de récurrence $T_R$ des signaux (Vc) du générateur (9) s'exprime en fonction du temps de retard $\tau$ du signal écho (Er) sous la forme $T_R=(2\tau)/(2K+1)$ où K est un nombre entier incluant la valeur zéro et qu'un signal écho soit détecté par l'amplificateur passe-bande à audiofréquence.

2. Radioaltimètre selon la revendication 1, caractérisé en ce que le modulateur d'émission (5) est un générateur de signaux en dents de scie de type analogique.

3. Radioaltimètre selon la revendication 1, caractérisé en ce que le modulateur d'émission (5) est un générateur en dents de scie de type numérique qui comprend connectés en série, un compteur d'impulsions (50) et un convertisseur numérique-analogique (51).

# EP 0 170 557 B1

**Patentansprüche**

1. Funk-Höhenmesser, der mit nur einer Antenne sowie mit Frequenzmodulation arbeitet, mit einem eine kontinuierliche, linear frequenzmodulierte Welle ausstrahlenden Sender, der einen Funkfrequenzoszillator (4) aufweist, welcher an einen Modulator (5) angeschlossen ist, der Modulationssignale (Vm) lierfert, einem Homodyne-Empfänger, der in Reihenschaltung einen mit einer Quelle für ein Lokalfrequenzsignal (3) verbundenen Funkfrequenzmischer (6) und einen Tonfrequenz-Bandpaßverstärker (7) aufweist, an dessen Ausgang ein Signal gewonnen wird, dessen Frequenz gleich der Schwebungsfrequenz zwischen dem Lokalsignal des Mischers und dem Echosignal der Erfassungs- und Verfolgungsschaltungen (8) für das Signalecho (Er) ist, wobei diese Schaltungen ein Ausgangssignal ($V_H$) liefern, welches repräsentativ für die Verzögerungszeit τ des Echosignals ist, mit einer Richtantenne (1), die dem Sender und dem Empfänger gemeinsam sind, sowie Mitteln (2), um den Sender und den Empfänger mit der Antenne zu verbinden,

dadurch gekennzeichnet, daß diese Mittel einen Sende/Empfangs-Umschalter (2) aufweisen, der mit der Antenne verbunden ist und einen Steuereingang (C) aufweist, welcher mit einem Generator (9) zur Erzeugung von periodischen Signalen (Vc) verbunden ist, und daß die Erfassungs- und Verfolgungsschaltungen ferner ein Steuer-Ausgangssignal ($V_R$) liefern, welches die Folgeperioden der Ausgangssignale des Modulators (5) und des Steuergenerators (9) für den Umschalter (2) in solcher Weise steuert, daß die Folgeperiode (Tm) der Modulationssignale proportional zur Verzögerungszeit des Signalechos (Er) ist, daß die Folgeperiode $T_R$ der Signale (Vc) des Generators (9) in Abhängigkeit von der Verzögerungszeit τ des Signalechos (Er) in der Form $T_R=(2\tau)/(2K+1)$ ausgedrückt wird, worin K eine ganze Zahl ist, welche den Wert Null einschließt, und daß ein Echosignal durch den Tonfrequenz-Bandpaßverstärker erfaßt wird.

2. Funk-Höhenmesser nach Anspruch 1, dadurch gekennzeichnet, daß der Sendemodulator (5) ein Sägezahnsignalgenerator vom Analogtyp ist.

3. Funk-Höhenmesser nach Anspruch 1, dadurch gekennzeichnet, daß der Sendemodulator (5) ein digitaler Sägezahngenerator ist, der in Reihenschaltung einem Impulszähler (50) und einen Digital/Analog-Umsetzer (51) aufweist.

**Claims**

1. A mono-antenna FM radioaltimeter, comprising a transmitter for transmitting a continuous wave linearly modulated in its frequency, said transmitter including a radiofrequency oscillator (4) connected with a modulator (5) supplying modulation signals (Vm), a homodyne receiver including, connected in series, a radiofrequency mixer (6) connected with a source (3) of a local frequency signal, a pass band audiofrequency amplifier (7) at whose output there is produced a signal with a frequency equal to the beat frequency between the local signal of the mixer and the echo signal, and acquisition and pursuit circuits (8) for the echo signal (Er), which circuits supply an output signal ($V_H$) representative of the delay time τ of the echo signal, a directional antenna (1) common to the transmitter and the receiver and means (2) in order to connect the transmitter and the receiver to the said antenna, characterized in that the said means comprises a transmit receive switch (2) connected with the said antenna, said switch having a command input (C) connected with a generator (9) of periodic signals (Vc) and in that the acquisition and pursuit circuits also supply a command output signal ($V_R$), which controls the periods of recurrence of output signals of the modulator (5) and of the command generator (9) of the switch (2) in such a manner that the period of recurrence (Tm) of the modulation signals be proportional to the delay time τ of the end signal (Er), in that the period of recurrence $T_R$ of the signals (Vc) of the generator (9) may be expressed as a function of the delay time τ of the echo signal (Er) in the form $T_R=(2\tau)/(2K+1)$, wherein K denotes a whole number including zero and that a echo signal is detected by the audiofrequency pass band amplifier.

2. The radioaltimeter as claimed in Claim 1, characterized in that the transmission modulator (5) is a saw tooth signal generator of the analog type.

3. The radioaltimeter as claimed in Claim 1, characterized in that the transmission modulator (5) is a saw tooth signal generator of the digital type which comprises, connected in series, a pulse counter (50) and a D/A converter (51).

# FIG_1

100

130 OSCILLATEUR R,F (GUNN)

140 MODULATEUR

110

120

H

150 DETECTEUR R F

160 PROCESSEUR ET COMPTEUR DE FREQUENCE

$V_s = K.H$

EP 0 170 557 B1

# FIG_2

OSCILLATEUR FM (4)

MODULATEUR (5)

GENERATEUR SIGNAUX DE COMMANDE (9)

MELANGEUR R.F (6)

AMPLI. AUDIO PASSE-BANDE (7)

CIRCUITS DE TRAITEMENT (8)

EP 0 170 557 B1

# FIG_3

EP 0 170 557 B1

FIG_4

FIG_5

FIG_6

# FIG_7

# FIG_8

# FIG_9

# FIG_10

EP 0 170 557 B1

FIG.11